# EUROPEAN PATENT SPECIFICATION

(11) **EP 1 599 974 B1**
(45) Date of publication and mention of the grant of the patent: **13.12.2006**
(21) Application number: 04713595.9
(22) Date of filing: 23.02.2004
(51) Int. Cl.: H04L 12/56

(54) **APPARATUS AND METHOD TO OPTIMIZE POWER MANAGEMENT IN AN INDEPENDENT BASIS SERVICE SET OF A WIRELESS LOCAL AREA NETWORK**
GERÄT UND VERFAHREN ZUM OPTIMIEREN DER LEISTUNGSVERWALTUNG IN EINEM IBSS EINES WLAN
APPAREIL ET PROCEDE D'OPTIMALISATION DE LA GESTION DE PUISSANCE DANS UN ENSEMBLE DE SERVICES DE BASE INDEPENDANTS D'UN RESEAU LOCAL SANS FIL

(30) Priority: 27.02.2003 US 451032 P; 10.06.2003 US 477208 P
(43) Date of publication of application: 30.11.2005
(73) Proprietor: Koninklijke Philips Electronics N.V., 5621 BA Eindhoven (NL)
(72) Inventor: ZHONG, Zhun, Briarcliff Manor, NY 10510-8001 (US); CHOI, Sunghyun, Briarcliff Manor, NY 10510-8001 (US)
(74) Representative: Eleveld, Koop Jan
(86) International application number: PCT/IB2004/000477
(87) International publication number: WO 2004/077718

(56) References cited:
- "IEEE 802.11 First Edition 1999: Information Technology; Telecommunications and information exchange between systems; Local and metropolitan area networks; Specific requirements; Part 11: Wireless LAN Medium Access Control (MAC) and Physical Layer (PHY) specifications; PAGES 133-136" 20 August 1999 (1999-08-20), , XP002298630 chapter 11.2
- EUN-SUN JUNG ET AL: "An energy efficient MAC protocol for wireless LANs" 23 June 2002 (2002-06-23), PROCEEDINGS IEEE INFOCOM 2002. THE CONFERENCE ON COMPUTER COMMUNICATIONS. 21ST. ANNUAL JOINT CONFERENCE OF THE IEEE COMPUTER ANDCOMMUNICATIONS SOCIETIES. NEW YORK, NY, JUNE 23 - 27, 2002, PROCEEDINGS IEEE INFOCOM. THE CONFERENCE ON COMPUTER COMMUNICA , XP010593744 ISBN: 0-7803-7476-2 page 1757, left-hand column, paragraph 3 - page 1758, right-hand column, paragraph 2
- CHIH-SHUN HSU ET AL: "Minimize waiting time and conserve energy by scheduling transmissions in IEEE 802.11-based ad hoc networks" 23 February 2003 (2003-02-23), , PAGE(S) 393-399 , XP010637838 page 395, chapter 2.3 page 396, chapter 4

## Description

The present invention relates to power management in an Independent Basic Service Set Wireless Local Area Network (WLAN). More particularly, the present invention relates to power management in an Institute of Electrical and Electronics Engineers (IEEE) 802.11 IBSS WLAN. Most particularly, the present invention relates to providing higher throughput thereby optimizing power use in an IBSS WLAN for a given Ad-hoc Traffic Indication Message (ATTM) window size.

The wireless local area network (WLAN) is becoming the dominant network technology. This growth in popularity is due to the explosive growth in demand for portable wireless devices and communications networks to service these devices.

The WLAN supports two types of networks: the Infrastructure BSS and Independent BSS (IBSS). The basic service set (BSS) is the basic building block of a WLAN. Each BSS consists of at least two stations (STAs).

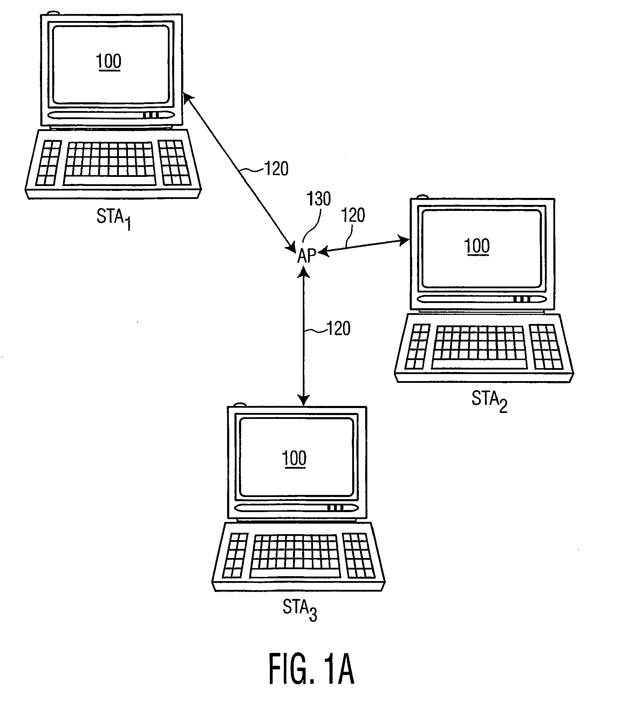

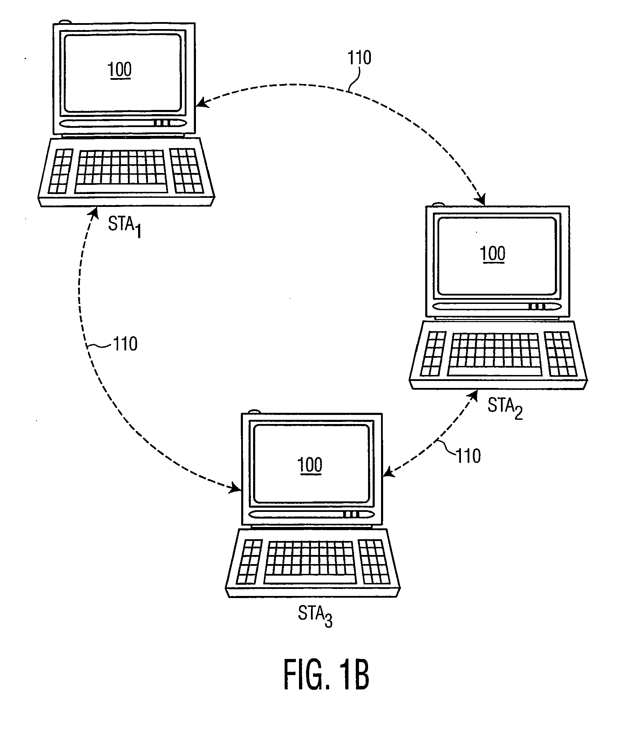

Referring to FIG. 1a, an Infrastructure BSS is illustrated in which STAs 100 communicate via a central access point (AP) 130 that receives traffic 120 from the source STA 100 and relays it 120 to the destination STA 100. Referring to FIG. 1b, an Independent BSS or IBSS is illustrated (also known as an Ad-hoc network) in which each STA 100 communicates 110 with other STAs 100 directly, without the assistance of an AP. That is, each STA 100 in an Ad-hoc network can communicate with another STA 100 if they are within radio range of one another since all traffic is peer-to-peer in an IBSS.

Many applications of a WLAN are for mobile devices which are battery-powered. Therefore power consumption of a WLAN card is a critical factor in overall IBSS WLAN power management. For example, an IEEE 802.11 standard WLAN utilizes carrier sense multiple access with collision avoidance (CSMA/CA) as the access method, requiring stations to continuously monitor the medium during idle time. As a result, the power consumed in the idle mode is not much less than the power consumed in the transmit or receive mode.

According to the IEEE Standard 802.11 First Edition 1999 chapter 11.2, power saving in a WLAN is achieved by allowing STAs, whenever appropriate, to enter a lower power consumption mode, i.e., sleep mode, during which the WLAN card does not monitor the medium. Note that entering sleeping mode is different from turning the WLAN card off, as it will take much longer to turn on the WLAN card from the off state than to awaken a WLAN card from sleep mode.

With regard to power consumption, a typical WLAN card consumes 1.5w in transmit mode, 1.25 w in receive mode, about 1.12 in idle mode, and just 0.045w in sleep mode. Sleep mode provides substantial power savings. However, although power is saved in sleep mode, the STAs in sleep mode are totally isolated from the rest of the network. In sleep mode STAs can neither transmit nor receive any packets. This raises a problem: when a STA has packets to transmit and the destination STA is in sleep mode, namely, "How to wakeup the destination STA so that it can receive the packets?" That is, the challenge is to have the destination station wake up at the right time when the source station decides to transmit packets.

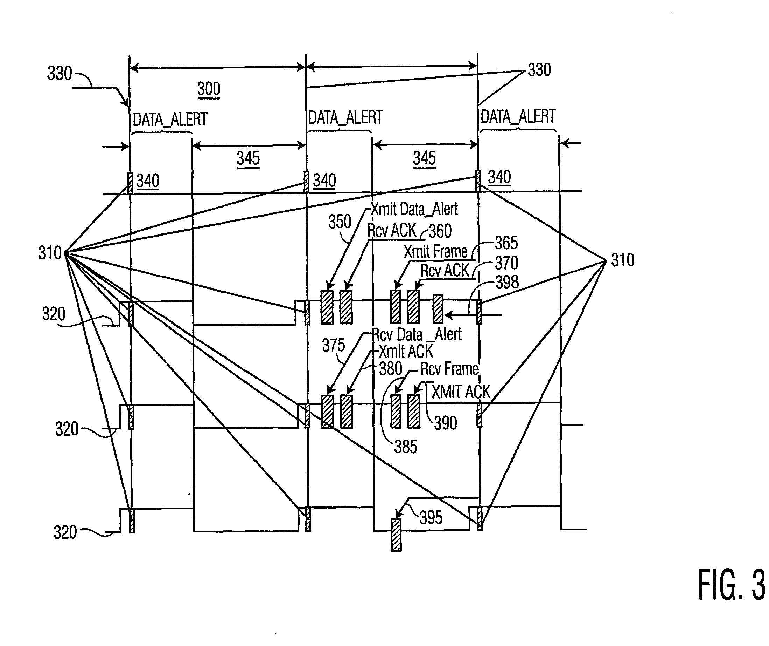

To solve this problem, an IBSS WLAN uses a Data_Alert message and a Data_Window to perform power management for the IBSS. FIG. 3 illustrates the operation of an IBSS WLAN. At a predetermined interval, known as Target Beacon Transmission Time (TBTT) 330, all STAs of the IBSS wake up and compete to send their Beacon 310 out because Beacon generation in an IBSS WLAN is distributed. Each STA in the IBSS has a Beacon 310 ready to transmit at the TBTT 330 and competes with all other STAs in the IBSS to access the medium using a random delay. The STA that wins the contention cancels all the other pending Beacon transmissions. Therefore, except for the case of Beacon failure, one Beacon 310 is transmitted per Beacon Interval 300.

A window of a predetermined length and that occurs right after the Beacon is reserved as a Data_Alert window 340, in which only Data_Alert frames 350 and acknowledgements 360 can be transmitted. Data_Alert frames 350 are traffic announcements, used by source STAs to inform destination STAs that there are data frames buffered at the source waiting to be transmitted to the destination. The Data_Alert frames 350 (and their acknowledgements 380) resolve contention by following the same distributed coordination function (DCF) rules as normal data frames. Data_Alert frames 350 that cannot be transmitted before the Data_Alert window 340 ends are transmitted during the next Beacon Interval which follows the next TBTT 330.

After the Data_Alert window 340 is over, if a STA doesn't successfully send or receive any Data_Alert frames 350 375, it can assume that there will be no traffic for it during the current Beacon Interval 340 and, thus, it can go back to sleep (low power mode) until the next TBTT 330. Otherwise, a STA can start transmission of data frames 365 and receipt of acknowledgements 370 or stay in the receiving mode throughout the Beacon Interval 340 to receive a data frame 385 and transmit an acknowledgement 390. Note that, according to IEEE 802.11 chapter 11.2.2.1, only the data that is announced during the Data_Alert window 340 can be transmitted after the Data_Alert window 340 (however, there is an exception given in IEEE 802.11 chapter 11.2.2.4 j)). Current approaches to power management require the Data_Alert window 340 size to be a fixed size throughout the lifespan of an IBSS.

The power management scheme of prior art IBSS WLANs can be summarized as follows. A STA periodically wakes up for a small period of time during which everyone else is also known to be awake. Within this period, STAs try to "book" their destination STAs for the packets they have buffered. At the end of this period, a STA by default goes back to sleep unless it has booked any destination STA or has been booked as a destination STA during the period.

This prior art power management scheme has the following two drawbacks:
1) Only the STAs that have explicitly booked their destination STAs can transmit data frames during the remainder 345 of the Beacon Interval 300; and
2) A STA must stay awake for the entire Beacon Interval as long as either it has booked any destination STA or it has been booked as a destination STA.

Accordingly, there is a need to:
1) Allow overheard information (knowledge) overheard by a STA to be used, and
2) Allow STAs to go back to sleep as long as they finish the announced traffic.

Since STAs monitor the medium constantly when they are awake, STAs overhear conversations in which source STAs "book" destination STAs. This overheard information can be used as a basis on which a STA stays awake to transmit buffered data frames to a destination STA some other STA has booked since in the prior art STAs that have been booked remain awake for the entire Beacon Interval 300. However, to minimize power use a STA should be able to go to sleep when all announced traffic has been either received or sent by the STA.

Thus, the essence of IBSS WLAN power management in the system and method of the present invention concerns "knowledge" ---- knowledge about whether the destination STA will be awake. The key used by the system and method of the present invention to optimize IBSS WLAN power management is the maximum use of this knowledge. That is, in the system and method of the present invention, STAs utilize this knowledge regardless of how the knowledge is obtained (i.e., explicit or implicit). Therefore, in a preferred embodiment, if a STA is confident that its destination STA is awake, it transfers data frames to the destination STA even though it did not explicitly book the destination STA.

According to the prior art power management scheme for an IBSS WLAN, each booked STA knows exactly which STAs are going to send packets to it during a Beacon Interval 300. After all the STAs from which STA B is expecting data frames have finished sending their data frames to STA B, it is a waste of power to have STA B stay awake any further in the Beacon Interval 300.

According to the invention a method for power management as defined in claim 1, and an apparatus for power management as defined in claim 16, are provided.

The system and method of the present invention mitigates the two drawbacks of prior art IBSS WLAN power management schemes stated above by:
1) allowing STAs to use overheard information (knowledge); and
2) allowing STAs to go back to sleep (low power mode) as long as they finish their announced traffic.

In the prior art IEEE 802.11 standard, Data_Alert window 340 is an Ad-hoc traffic indication message (ATIM) window and Data_Alert frames 350 are ATIM frames. Further, a "More Data" bit in the frame control field of the MAC header is only used in the Infrastructure BSS. To address the problem of a STA going to sleep after all announced traffic, a preferred embodiment of the system and method of the present invention uses the "More Data" bit in IBSS for power management purposes.

Accordingly, the apparatus and method of the present invention provides a "More Data" bit that allows STAs of an IBSS WLAN to take advantage of information overheard by a STA concerning STAs that have been "booked" as destination STAs. A value of 1 for the "More Data" bit indicates there is at least one more frame at the source STA for the same destination STA whereas a value of 0 indicates that there are no more frames for this destination STA from this source STA. Thus, if at least one data frame from a non-booking STA gets through, the destination STA stays awake if the More Data bit is set to 1.

The foregoing and other features and advantages of the present invention will be apparent from the following, more detailed description of preferred embodiments as illustrated in the accompanying drawings.
FIG. 1a illustrates an infrastructure BSS WLAN.
FIG. 1b illustrates and independent BSS or IBSS WLAN.
FIG. 2 illustrates a simplified block diagram of each STA within a particular IBSS according to an embodiment of the present invention.
FIG. 3 illustrates power management operation in IBSS according to an embodiment of the present invention.
FIG. 4 illustrates an empty Destination List at the start of a Data_Alert window.
FIG. 5 illustrates the Destination List of FIG. 4 after the Source STA has sent one
   Data_Alert frame to STA₁ and overheard a successful booking conversation between STA₂ and STA₅.
FIG. 6 illustrates the Destination List of FIG. 5 after the Source STA has sent a Data_Alert frame to STA₃.
FIG. 7 illustrates the Destination List of FIG. 6 after the Source STA has sent STA₂ a data frame with "More Data" indicator set to 1.
FIG. 8 illustrates the Destination List of FIG. 7 after the Source STA has overheard a data frame sent to/from STA₄.
FIG. 9 illustrates an empty Source List at the start of a Data_Alert window.
FIG. 10 illustrates the Source List of FIG. 9 after the Source STA receives a Data_Alert message from STA₁₀ and STA₁₄.
FIG. 11 illustrates the Source List of FIG. 10 after the Source STA receives a data frame from STA₁₁ and STA₁₃, each with "More Data" indicator set to 1.
FIG. 12 illustrates the Source List of FIG. 11 after the Source STA receives a data frame from STA₁₀ with "more Data" indicator set to 0.

In the following description, by way of example and not limitation, specific details are set forth such as the particular architecture, power management techniques, etc., in order to provide a thorough understanding of the present invention. However, to one skilled in the art it will apparent that the present invention may be practiced in other embodiments that depart from the specific details set forth.

In the prior art 802.11 standard, defined in International Standard ISO/IED 8802-11, "Information Technology-Telecommunications and information exchange area networks", 1999 Edition, the "More Data" bit in the frame control field of the MAC header is only used in the Infrastructure BSS. In a preferred embodiment, the system and method of the present invention uses the "More Data" bit in IBSS for power management.

In a preferred embodiment, the present invention provides a power save mode in which the "More Data" bit is valid in directed data or management type frames transmitted by STAs of an IBSS WLAN. A value of 1 indicates that at least one additional buffered data or management frame is present at the source STA for the same destination STA. A value of 0 indicates that no more data or management frame is present at the source STA for the same destination STA.

FIG. 1b illustrates a representative network whereto embodiments of the present invention are to be applied. As illustrated in FIG. 1b, a plurality of STAs 100 communicates through a wireless link with each other via a plurality of wireless channels 110 such that all traffic is peer-to-peer. A key principle of the present invention is to provide a mechanism to optimize power use by each wireless STA 100 such that within each Beacon Interval 300 the maximum number of data frames 365 are transmitted between the STAs 100 while at the same time a STA 100 either stays awake for the entire Beacon Interval or, alternatively, only if it has frames to transmit and/or receive and goes into a sleep or low power mode otherwise to conserve power. It should be noted that if the remaining time 350 in a Beacon Interval 300 is small, a STA 100 may not enter sleep mode since the power consumed to awake at the next TBTT 330 may exceed the power saved by going into sleep mode for so short a time. Further, it should be noted that the IBSS network shown in FIG. 1b is small for purposes of illustration. In practice most networks include a much larger number of mobile STAs 100.

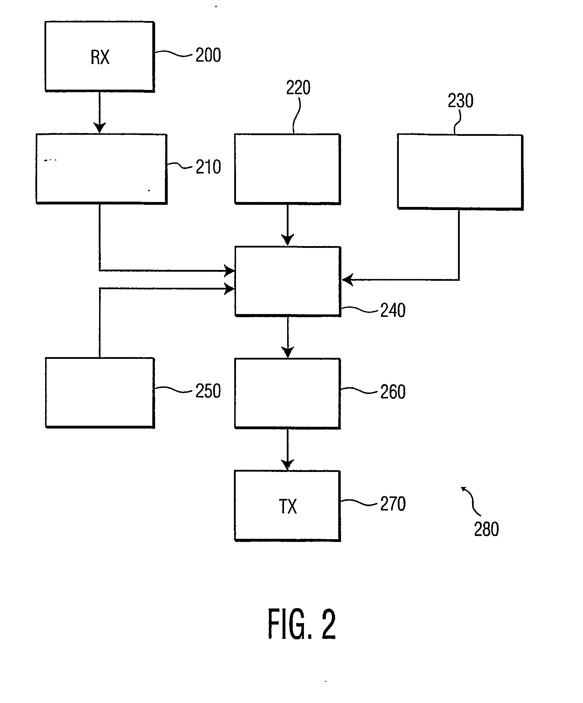

Referring to FIGs. 1b and 2, each STA 100 of an IBSS within the WLAN of FIG. 1b may include a system with an architecture that is illustrated in the block diagram of FIG. 2. Each STA 100 may include a receiver 200, a demodulator 210, a memory 220, a power management circuit 230, a control processor 240, a timer 250, a modulator, 260, and a transmitter 270. The exemplary system 280 of FIG. 2 is for descriptive purposes only. Although the description may refer to terms commonly used in describing particular mobile STAs, the description and concepts equally apply to other processing systems, including systems having architectures dissimilar to that shown in FIG. 2.

In operation, the receiver 200 and the transmitter 270 are coupled to an antenna (not shown) to convert received signals and desired transmit data via the demodulator 210 and the modulator 260, respectively. The power management circuit 230 operates under the control of the processor 240 to determine whether the STA 100 should remain awake throughout the remainder 345 of a given Beacon Interval 300 or go to sleep (low power mode) by determining if there are data frames to be sent/received (1) explicitly "booked", (2) overheard and implicitly booked, and (3) as indicated by a "More Data" bit in a received message. Further, one the STA has made a decision to go to sleep (low power mode) if the remaining time 340 for the given Beacon Interval 300 must e greater that a predetermined threshold or the STA remains awake for the duration of the Beacon Interval 300. The computed remaining time in the Beacon Interval 300 is determined by subtracting the current time from the time of the next TBTT, the latter value being stored in the memory 230. The timer 250 is used to wake up a sleeping STA at predetermined TBTTs 330 and to schedule the control processor 240 to send a Beacon since at the TBTT all STAs compete to send their Beacons.

In a preferred embodiment, each STA 100 keeps a list of source STA identifiers from which it expects to receive packets during a given Beacon Interval 300. At the end of the Data_Alert window 340, the list consists of identifiers of STAs that have explicitly booked this STA during the Data_Alert window 340. After the Data_Alert window 340, the STA 100 adds to the list, if it is not already in the list, a STA from which it receives a data or management frame with the "More Data" bit set to 1. On the other hand, the STA 100 deletes from the list, if it is already in the list, a STA from which it receives a data or management frame with the "More Data" bit set to 0. When the list is empty, the STA 100 assumes no obligation to other STAs to stay awake. If the STA 100 itself does not have any packets to send to other STAs, it can then go to sleep and wake up at the next TBTT 330, provided the remaining time 345 of the Beacon Interval 300 is greater than a predetermined threshold since the extra power consumption associated with the mode switching may not save power if the sleep is too short. Therefore, a STA eligible to go to sleep does so only if the expected sleeping time is greater than the predetermined threshold.

Since a wireless medium is a broadcast medium, every STA 100 can overhear the traffic over the medium within a certain range. Therefore, it is possible that STA A₁ overhears that STA A₂ booked STA A₃ during a Data_Alert window 340. Such information is used in a preferred embodiment to improve the performance of the overall IBSS. Depending on the STAs' behavior after the Data_Alert window 340, either of the two following embodiments of the present invention utilizes this overheard information to improve power management and overall IBSS performance.
1) STAs that stay awake after the Data Alert window 340, stay awake throughout the entire Beacon Interval 300, as defined in the current standard. In a preferred embodiment, as long as STA A₁ overhears that STA A₂ booked STA A₃ in the ATIM window, STA A₁ knows that both STA A₂ and STA A₃ will stay awake for the entire Beacon Interval 300. Therefore, STA A₁ can, after the Data_Alert window 340 during the remainder of the Beacon Interval 345, send frames to either STA A₂ or STA A₃ without explicitly booking either of them in the Data_Alert window 340 and assured that the destination STA is available just as if it had been explicitly booked.

Therefore, whenever a STA overhears a successful Data_Alert conversation (a Data_Alert frame 350 followed by the corresponding acknowledgement 360), the STA should cancel, if any, its pending Data_Alert frames 350 directed to either party of the overheard Data_Alert conversation. Thus, the result is less Data_Alert frame 350 traffic, which conserves power.

If a STA overhears just the Data_Alert acknowledgement 380, the STA should cancel, if any, its pending Data_Alert frame 350 directed to the sender of the Data_Alert acknowledgement 380.

If a STA 100 just overhears a Data_Alert frame 350, the STA 100 should make no assumption about the availability of either the overheard source or its intended destination being awake during the remainder of the Beacon Interval 345.

In the ideal case, each destination STA 100 should be booked just once per Beacon Interval 300 regardless of the number of source STAs. Doing so will reduce the Data_Alert 350 traffic within the Data_Alert window 340, thus reducing the Data_Alert window 340 size needed. Since transmitting Data_Alert frames 350 also consumes power, reducing Data_Alert frame 350 traffic means less overhead power consumption. One the other hand, a smaller Data_Alert window 340 leaves more time for data transmission, and thus may improve throughput.
2) STAs, that stay awake after the ATIM window, can go back to sleep upon finishing all the announced traffic. In an alternative preferred embodiment, when STA A₁ overhears that STA A₂ booked STA A₃, STA A₁ knows that both STA A₂ and STA A₃ will stay awake after the Data_Alert window 340, but STA A₁ does not know how long STA A₂ and STA A₃ will stay awake. Without explicitly booking STA A₂ or STA A₃ itself, STA A₁ cannot guarantee that STA A₂ or STA A₃ are awake when it sends frames to them.

Despite the uncertainty, the overheard information in this embodiment still has value. Although STA A₁ would still like to book all the destination STAs it has traffic to, it gives priority to the destination STAs that it knows nothing about, i.e., has not overheard a conversation involving them, by booking them first. Should the Data_Alert window 340not be long enough, STA A₁ leaves out STA A₃, which someone else already booked, rather than STA A₄, that no one else ever booked. After all, STA A₁ gets another chance to "book" STA A₃ after the Data_Alert window 340 is over by sending STA A₃ a frame with the "More Data" bit set to 1 early enough before STA A₂ finishes sending all its frames directed to STA A₃.

The basic idea of this embodiment is to book as many distinct destination STAs as possible within a limited Data_Alert window 340.

After the Data_Alert window 340, each STA first tries to send, if any, one frame to each of the STAs booked by others but not by itself. With the "More Data" bit set to 1, these frames provide another chance to book the destinations that the STA could not book during the Data_Alert window 340. The least a STA should worry about is the STAs it already booked during the Data_Alert window 340, as these STAs have given their commitment and will remain awake to receive frames anyway. From another perspective, holding back traffic to the booked STAs in fact gives a greater window of opportunity for other STAs to "book" after the Data_Alert window 340 by using the "More Data" bit.

Still, sending frames to an un-booked destination STA is taking a chance. A STA should take a failed (or a certain number of failed transmissions) transmission as an indication that the destination STA is no longer awake and move on to its next destination STA.

### Implementation Using Lists of Source and Destination STAs

A preferred embodiment of an implementation of the present invention uses two lists: a Source STA list and a Destination STA list.

### 1. Destination List of STAs Maintained by a Given STA

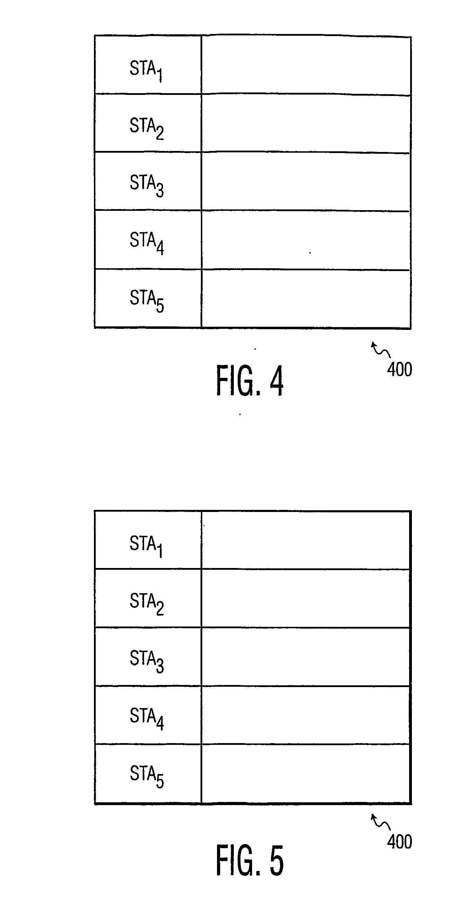

At the beginning of a Data_Alert window 340, a given STA determines a list of those Destination STAs it is buffering frames to be sent during the current Beacon Interval. Suppose the five STAs shown in FIG. 4 form the initial Destination List of STAs maintained by a given STA. The given STA would like to book each of the STAs in the Destination List, if possible. Note that, at this moment (at the beginning of the Data_Alert window 340), nothing has happened, i.e., every entry corresponding to the STAs in the Destination List is empty, as illustrated in FIG. 4. After that, whenever the given STA successfully sends a Data_Alert frame to a STA in the Destination List, it marks the Destination STA in the Destination List as "Booked".

Meanwhile, whenever the given STA overhears a Data_Alert conversation between two other STAs, the given STA marks the corresponding STAs in the Destination list as "Booked by others". Within the Data_Alert window 340, the given STA always chooses from the Destination list an unmarked Destination STA to send a Data_Alert to, as long as there is such a Destination STA in the Destination list. Only after all the Destination STAs in the Destination list are marked as either "Booked" or "Booked by others", can the STA choose to send a Data_Alert frame to Destination STAs marked as "Booked by others".

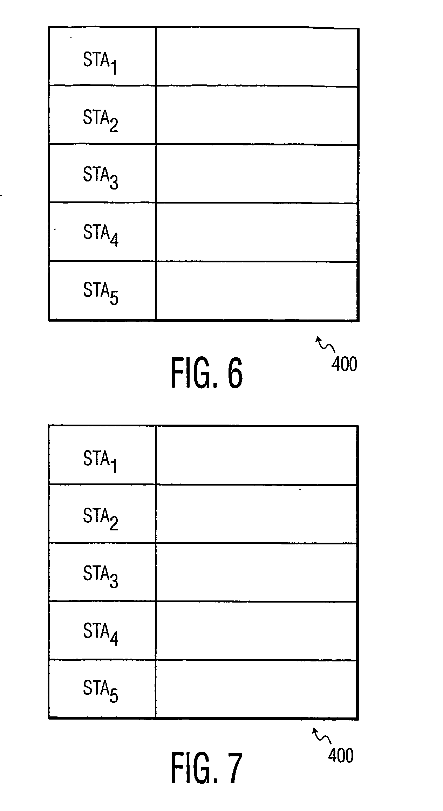

Suppose the given STA sends a Data_Alert frame to Destination STA₁ in order to "book" STA₁ as a Destination STA for at least one frame buffered by the given STA, and overhears a conversation between STA₂ and STA₅. The resulting Destination list is illustrated in FIG. 5. Then given STA sends a Data_Alert frame to STA₃ to "book" STA₃ as a Destination STA and marks STA₃ in the Destination list as "booked", as illustrated in FIG. 6.

Now, *assume that the Data_Alert window 340 ends* when the Destination List looks as shown in FIG. 6. This Destination List is now used by the given STA to decide which Destination STAs to send data frames to and in what order. The given STA first sends data frames to the Destination STAs in the Destination List marked as "booked by others". If there is more than one frame buffered for a Destination STA, the "More Data" bit of the data frame is set to 1, see FIG. 7. Once the data frame is successfully sent, the given STA changes the entry in the Destination List from "Booked by others" to "Booked" because the Destination STA looked at the "More Data" bit that was set to 1 and stays awake to receive more data frames from the given STA. The given STA continues in this manner for all the "Booked by others" Destination STAs in the Destination List before sending any data frame to the "Booked" STAs in the Destination List. This ordering of sending data frames is intended to provide the given STA with another chance to "book" destination STAs and to improve the probability of success.

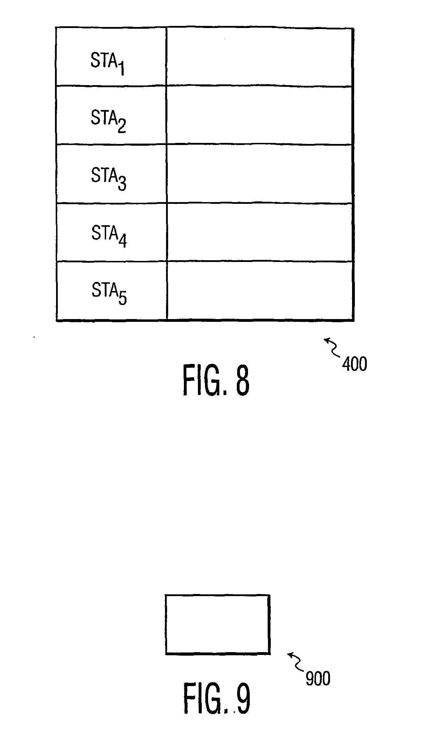

Meanwhile, if the given STA overhears data frames to/from an unmarked STA, i.e., STA₄ in the Destination List, the given STA should mark STA₄ as "Booked by others", see FIG. 8. Otherwise, the given STA should not try to send DATA frame to unmarked STAs in the Destination List because the unmarked STAs most likely are in sleep mode because the unmarked STAs likely did not receive any Data_Alert frames.

Once all the STAs in its Destination List are "Booked", the given STA can send data frames in whatever order.

### 2. Source List of STAs Maintained by a Given STA

This Source List contains STAs from which the given STA has received notice, i.e., "the booking order". In the following example, STA₁₀-STA₁₅ are used to simplify the exposition, however, the two lists are definitely not, mutually exclusive.

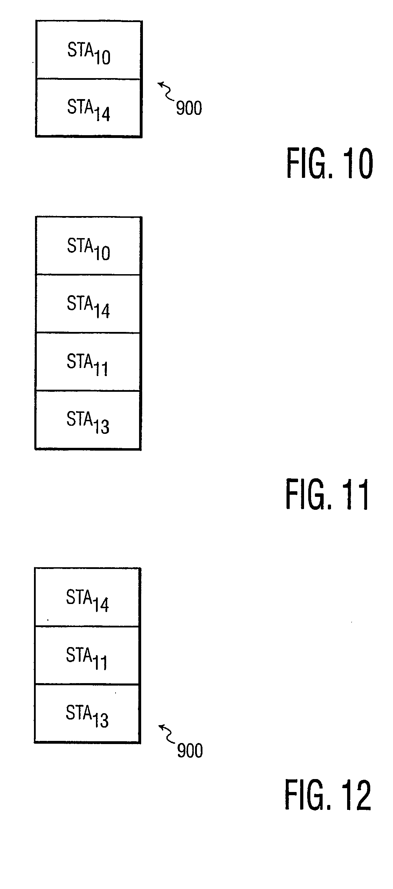

Unlike the Destination List, the Source List is empty to start with at the beginning of a Data_Alert window 340, see FIG. 9, and there is no mark needed for the Source List. Within the Data_Alert window 340, the given STA adds a Source STA to the Source List a source STA if it receives a Data_Alert frame from the Source STA, see FIG. 10.

After the Data_Alert window 340 ends, the given STA adds to the Source List a Source STA if it receives a data frame with a "More Data" bit set to 1 from the Source STA and the source STA is not already in the Source List, see FIG. 11. The given STA deletes from its Source List a Source STA if the given STA receives from the Source STA a data frame with the "More Data" bit set to 0, see FIG. 12.

Once the Source List is empty, the given STA can assume that no other STA is going to send frames to the given STA during the current Beacon Interval 300. After that, if the given STA has no more data frames to send to any other STAs, the given STA can go back to sleep if the remaining time 350 in the Beacon Interval is greater than a pre-determined threshold.

Referring now to FIG. 3, in general, the ATIM of the IEEE 802.11 IBSS WLAN is a Data_Alert window 340 of a known and fixed length so that during the Data_Alert/ATIM window 340 each STA 100 can alert another STA 100 of the IBSS that it has data for it, by sending that STA a Data_Alert/ATIM frame 350. The system and method of the present invention applies to IEEE802.11 IBSS WLANs for purposes of power management and increased throughput.

As is apparent from the foregoing, by taking advantage of overheard information according to the system and method of the present invention, STAs of an IBSS WLAN can achieve near-optimal use of power with accompanying increased throughput for a given fixed size of the Data_Alert window and is applicable to IEEE 802.11 IBSS WLANs.

While the present invention has been described in connection with what is presently considered to be the best mode for managing power in an IBSS WLAN by using information overheard in conversations between other STAs, namely, this overheard information is used to send data frames from a source STA to destination STAs during the current Beacon Interval without explicitly booking the destination STAs so as to reduce use of bandwidth by not having to send Data_Alerts and their acknowledgements, it is to be understood that the invention is not limited to the disclosed embodiments.

## Claims

1. A method for power management by a wireless station [STA] (100) of a network having a plurality of STAs each of said plurality of STAs capable of being at least one of a Source STA and a Destination STA, which Source STA and Destination STA are directly communicating, the method comprising the steps of:
(a) booking by a first Source STA of a first Destination STA when there is at least one data frame buffered by the first Source STA for delivery to the first Destination STA; **characterized in that** the method comprises, when booking has ended, performing the steps of:
(b) sending any data frame (365) buffered by the first Source STA to a second Destination STA booked by a second Source STA of said plurality of STAs,
(c) when only buffered data frames (365) for booked Destination STAs remain to be sent by the first Source STA, sending any data frame buffered by the first Source STA to the booked Destination STAs,
(d) receiving any data frame sent by another STA of said plurality of STAs that was buffered by said another STA,
(e) allowing the first Source STA to sleep in low power mode when the first Source STA does not have a data frame to send or receive.

2. The method of claim 1, wherein said booking step further comprises the steps of:
(a.1) explicitly booking the first Destination STA as "booked" if said first Destination STA is not yet booked by any Source STA;
(a.2) implicitly booking an unbooked Destination STA as "booked by others" if overheard in a conversation selected from the group consisting of an acknowledgement of a booking by a Destination STA or a successful booking conversation between a Source STA and a Destination STA; and
(a.3) implicitly booking an unbooked Source STA as "booked by others" if overheard in a successful booking conversation between a Source STA and Destination STA.

3. The method of claim 2, wherein said booking step further comprises the step of:
(a.4) when all Destination STAs have been booked by a Source STA for which the Source STA has buffered at least one data frame (365), explicitly booking any implicitly booked STA.

4. The method of claim 3, further comprising the step of:
(f) implicitly booking as "booked by others" a Destination STA not yet booked by any Source STA, of an overheard data frame transmission between a Source STA and a Destination STA.

5. The method of claim 4, wherein:
said sending step (b) further comprises the steps of:
(b.1) setting a "More Data" bit to 1 or 0 in the data frame respectively based on whether or not there is more than one data frame (365) buffered for the Destination STA, and
(b.2) explicitly booking the destination STA as "booked" if there is more than one data frame buffered for the Destination STA; and
said receiving step (d) further comprises the step of
(d.1) staying awake until all data frames have been received for each said explicit and implicit booking of the STA as a Destination STA.

6. The method of claim 5, further comprising the steps of:
(g) all STAs of said plurality of STAs awakening at a periodic predetermined Target Beacon Transmission Time [TBTT] (330);
(h) performing said method in a fixed length time period following said periodic TBTT termed a Beacon Interval (300) comprising a fixed length Data_Alert window (340) followed immediately by a fixed length remainder period (345);
(i) performing said booking step (a) during said Data_Alert window, wherein said explicitly booking step (a.1) further comprises the step (a.1.1) of sending a Data_Alert frame (350) by the Source STA to the Destination STA; and
(j) performing steps (b)-(f) during said remainder period.

7. The method of claim 6, wherein said sleeping step (e) further comprises the step of first performing the steps of:
(e.1) determining if an amount of time until the next TBTT (330) is greater than a threshold; and
(e.2) if said amount of time is not greater than said threshold, staying awake until the next TBTT.

8. The method of claim 2, further comprising the steps of:
(g) all STAs of said plurality of STAs competing to send a Beacon (310) at a periodic predetermined Target Beacon Transmission Time [TBTT] (330);
(h) performing said method in a fixed length time period following said periodic TBTT termed a Beacon Interval (300) comprising a fixed length Data_Alert window (340) followed by a fixed length remainder period (345);
(i) performing said booking step (a) during said Data_Alert window, wherein said explicitly booking step (a.1) further comprising the step (a.1.1) of sending a Data_Alert frame (350) by the Source STA to the Destination STA; and
(j) performing steps (a)-(d) during said remainder period.

9. The method of claim 2, further comprising the steps of:
(g) all STAs of said plurality of STAs awakening at a periodic predetermined Target Beacon Transmission Time [TBTT] (330);
(h) performing said method in a fixed length time period following said periodic TBTT termed a Beacon Interval (300) comprising a fixed length Data_Alert window (340) followed by a fixed length remainder period (345);
(i) performing said booking step (a) during said Data_Alert window, wherein said explicitly booking step (a.1) further comprises the step (a.1.1) of sending a Data_Alert frame (350) by the Source STA to the Destination STA; and
(j) performing steps (a)-(e) during said remainder period.

10. The method of claim 9, wherein said sleeping (e) step further comprises the step of first performing the steps of:
(e.1) determining if an amount of time until the next TBTT is greater than a threshold; and
(e.2) if said amount of time is not greater than said threshold, staying awake until the next TBTT.

11. The method of claim 1, wherein said network is an Independent Basic Service Set [IBSS] Wireless Local Area Network [WLAN].

12. The method of claim 11, where said network has a Beacon Interval consisting of and Ad-hoc Traffic Indication Message [ATIM] window followed by a data frame transmission window, wherein:
step (a) of claim 1 is performed in said ATIM window; and
steps (b)-(d) of claim 1 are performed in said data frame transmission window.

13. The method of claim 5, wherein:
the booking step (a) further comprises the steps of:
(a.5) entering the Destination STA in a Destination List (400) by the Source STA, and
(a.6) entering the Source STA in a Source List (900) by the Destination STA;
the explicitly booking step (a.1) further comprises the step of:
(a.1.1) entering "booked" for the Destination STA in the Destination List;
the implicitly booking step (a.2) further comprises the step of:
(a.2.1) entering "booked by others" for the Destination STA in the Destination List;
the receiving step (d) further comprises the steps of:
(d.2) deleting a source STA from the Source List if said "More Data" bit of the received data frame (365) is zero, and
said staying awake step (d.1) further comprises:
(d.1.1) the step of staying awake if said Source List is not empty.

14. The method of claim 13, further comprising the steps of:
(g) all STAs of said plurality of STAs awakening at a periodic predetermined Target Beacon Transmission Time [TBTT] (330);
(h) performing said method in a fixed length time period following said periodic TBTT termed a Beacon Interval comprising a fixed length Data_Alert (340) window followed immediately by a fixed length remainder period (345);
(i) performing said booking step (a) during said Data_Alert window, wherein said explicitly booking step (a.1) further comprising the step (a. 1.1) of sending a Data_Alert frame (350) by the Source STA to the Destination STA; and
(j) performing steps (b)-(f) during said remainder period.

15. The method of claim 14, wherein said sleeping step (e) further comprises the step of first performing the steps of:
(e.1) determining if an amount of time until the next TBTT (330) is greater than a threshold; and
(e.2) if said amount of time is not greater than said threshold, staying awake until the next TBTT.

16. An apparatus for power management in a network having a plurality of wireless stations [STAs] (100) each of said plurality of STAs capable of being at least one of a Source STA and a Destination STA comprising:
a control component (280) of a STA of said plurality of STAs, said control component being configured, for directly communicating in the network between the Source STA and the Destination STA, to:
(a) periodically awaken the STA at a predetermined Target Beacon Transmission Time [TBTT] (330);
when the STA is awake and after the predetermined TBTT:
(b) identify the STA as a first Source STA and book a first Destination STA not known to be booked by a second Source STA of said plurality of STAs, when there is at least one data frame (365) buffered by the first Source STA for delivery to the first Destination STA;
**characterized in that** the control component is further configured to,
(c) when a pre-determined booking time has ended and during an immediately following transmission window (345),
(i) send any data frame buffered by the first Source STA to a second Destination STA that was booked by another STA of said plurality of STAs;
(ii) when only buffered data frames for booked Destination STAs remain to be sent by the first Source STA, send any data frame buffered by the first Source STA to the booked Destination STA;
(iii) receive any data frame sent by another STA of said plurality of STAs that was buffered by said another STA; and
(iv) put the first Source STA into sleep mode when the first Source STA does not have a data frame to send or receive.

17. The apparatus of claim 16, wherein:
when a data frame (365) is sent, the control component (280) is configured to set a "More Data" indicator to 1 if there is more than one data frame buffered for a Destination STA by the first Source STA, or to 0 if there is only one; and
the control component is configured to keep the Destination STA awake to receive the more H than one data frame as if the Source STA had booked the Destination STA for the more than one data frame.

18. The apparatus of claim 17, wherein said control component (280) is further configured to:
maintain a Source List (900) and a Destination List (400) of Source STAs and Destination STAs, said Destination List being annotated with "booked" and "booked by others" according as the STA booked a Destination STA in said Destination List or another STA booked the listed STA as a Destination STA;
delete a Source STA from the Source List when said "More Data" bit is 0; and
keep the STA awake if said Source List is not empty.

19. The apparatus of claim 18, further comprising a memory (220) wherein said Source List (900) and Destination List (400) are maintained by said control component (280).

20. The apparatus of claim 18, wherein:
for an overheard booking conversation between a Source STA and Destination STA, the control component (280) is configured to annotate at least one of the Source STA and Destination STA in the Destination List (400) with "booked by others";
for an overheard data frame (365) transmission between a Source STA and Destination STA the control component is configured to annotate at least one of the Source STA and Destination STA in the Destination List with "booked by others".

21. The apparatus of claim 16, wherein:
said network is an Independent Basic Service Set [IBSS] Wireless Local Area Network [WLAN];
said pre-determined booking interval is an Ad-hoc traffic indication message [ATIM] window (340);
said pre-determined booking interval and said immediately following transmission window are a Beacon Interval (300); and
a Destination STA is booked by a Source STA sending the Destination STA an ATIM frame (350).

## Patentansprüche

1. Verfahren zur Leistungsverwaltung durch eine drahtlose Station [STA] (100) eines Netzwerks mit einer Vielzahl von STAs, wobei jede aus der genannten Vielzahl von STAs mindestens entweder eine Quellen-STA oder eine Ziel-STA sein kann, wobei die Quellen-STA und die Ziel-STA direkt kommunizieren, und das Verfahren folgende Schritte umfasst:
(a) Buchen einer ersten Ziel-STA durch eine erste Quellen-STA, wenn es mindestens einen von der ersten Quellen-STA zwischengespeicherten Datenrahmen für die Lieferung an die erste Ziel-STA gibt; **dadurch gekennzeichnet, dass** das Verfahren, nachdem die Buchung beendet ist, die Ausführung folgender Schritte umfasst:
(b) Senden eines von der ersten Quellen-STA zwischengespeicherten Datenrahmens (365) an eine zweite Ziel-STA, die durch eine zweite Quellen-STA aus der genannten Vielzahl von STAs gebucht wurde.
(c) falls nur zwischengespeicherte Datenrahmen (365) für gebuchte Ziel-STAs von der ersten Quellen-STA zu senden bleiben, Senden eines von der ersten Quellen-STA zwischengespeicherten Datenrahmens an die gebuchten Ziel-STAs,
(d) Empfangen eines von einer anderen STA aus der genannten Vielzahl von STAs gesendeten Datenrahmens, der von der genannten anderen STA zwischengespeichert war,
(e) Der ersten Quellen-STA gestatten, im Niedrigenergiebetrieb zu schlafen, wenn die erste Quellen-STA keinen Datenrahmen zu senden oder zu empfangen hat.

2. Verfahren nach Anspruch 1, wobei der genannte Buchungsschritt weiterhin folgende Schritte umfasst:
(a.1) explizites Buchen der ersten Ziel-STA als "gebucht", wenn die genannte Ziel-STA noch von keiner Quellen-STA gebucht wurde;
(a.2) implizites Buchen einer nicht gebuchten Ziel-STA als "Von anderen gebucht", falls in einer aus der Gruppe ausgewählten Konversation bestehend aus einer Buchungsquittierung durch eine Ziel-STA oder einer erfolgreichen Buchungskonversation zwischen einer Quellen-STA und einer Ziel-STA mitgehört wurde; und
(a.3) implizites Buchen einer nicht gebuchten Quellen-STA als "Von anderen gebucht", falls in einer erfolgreichen Buchungskonversation zwischen einer Quellen-STA und Ziel-STA mitgehört.

3. Verfahren nach Anspruch 2, wobei der genannte Buchungsschritt weiterhin folgende Schritte umfasst:
(a.4) explizites Buchen jeglicher implizit gebuchten STA, falls alle Ziel-STAs von einer Quellen-STA gebucht wurden, für die die Quellen-STA mindestens einen Datenrahmen (365) zwischengespeichert hat.

4. Verfahren nach Anspruch 3, das weiterhin folgende Schritte umfasst:
(f) implizites Buchen einer noch nicht von einer Quellen-STA gebuchten Ziel-STA als "Von anderen gebucht" bei einer mitgehörten Datenrahmenübertragung zwischen einer Quellen-STA und einer Ziel-STA.

5. Verfahren nach Anspruch 4, wobei:
der genannte Sendeschritt (b) weiterhin folgende Schritte umfasst:
(b.1) Setzen eines "Weitere Daten"-Bits in dem Datenrahmen auf 1 oder 0, jeweils darauf basierend, ob mehr als ein Datenrahmen (365) für die Ziel-STA zwischengespeichert ist oder nicht, und
(b.2) explizites Buchen der Ziel-STA als "gebucht", falls mehr als ein Datenrahmen für die Ziel-STA zwischengespeichert ist; und
der genannte Empfangsschritt (d) weiterhin folgende Schritte umfasst:
(d.1) Aktiviert-bleiben, bis alle Datenrahmen für jede der genannten expliziten und impliziten Buchungen von STAs als eine Ziel-STA empfangen worden sind.

6. Verfahren nach Anspruch 5, das weiterhin folgende Schritte umfasst:
(g) Aktivieren aller STAs aus der genannten Vielzahl von STAs zu einer periodischen, vorgegebenen Zielbakenübertragungszeit (Target Beacon Transmission Time, [TBTT] (330));
(h) Ausführen des genannten Verfahrens in einer Zeitperiode fester Länge nach der genannten periodischen TBTT, genannt Beacon-Intervall (330), umfassend ein Data_Alert-Fenster (340) fester Länge, unmittelbar gefolgt von einer Restperiode (345) fester Länge:
(i) Ausführen des genannten Buchungsschritts (a) während des genannten Data_Alert-Fensters, wobei der genannte explizite Buchungsschritt (a.1) weiterhin den Schritt (a1.1) des Sendens eines Data_Alert-Rahmens (350) durch die Quellen-STA zur Ziel-STA umfasst; und
(j) Ausführen der Schritte (b)-(f) während der genannten Restperiode.

7. Verfahren nach Anspruch 6, wobei der genannte Schlafschritt (e) weiterhin den Schritt umfasst, zunächst folgende Schritte auszuführen:
(e.1) Ermitteln, ob eine Zeitdauer bis zur nächsten TBTT (330) größer als ein Schwellenwert ist; und
e.2) Aktiviert-bleiben bis zur nächsten TBTT, falls die genannte Zeitdauer nicht größer als der genannte Schwellenwert ist.

8. Verfahren nach Anspruch 2, das weiterhin folgende Schritte umfasst:
(g) Konkurrieren aller STAs aus der genannten Vielzahl von STAs, um zu einer periodischen, vorgegebenen Zielbakenübertragungszeit [TBTT] (330) ein Beacon (310) zu senden;
(h) Ausführen des genannten Verfahrens in einer Zeitperiode fester Länge nach der genannten periodischen TBTT, genannt ein Beacon-Intervall (300), umfassend ein Data_Alert-Fenster (340) fester Länge gefolgt von einer Restperiode (345) fester Länge;
(i) Ausführen des genannten Buchungsschritts (a) während des genannten Data_Alert-Fensters, wobei der genannte explizite Buchungsschritt (a.1) weiterhin den Schritt (a.1.1) des Sendens eines Data_Alert-Rahmens (350) durch die Quellen-STA zur Ziel-STA umfasst; und
(j) Ausführen der Schritte (a)-(d) während der genannten Restperiode.

9. Verfahren nach Anspruch 2, das weiterhin folgende Schritte umfasst:
(g) Aktivieren aller STAs aus der genannten Vielzahl von STAs zu einer periodischen, vorgegebenen Zielbakenübertragungszeit [TBTT] (330);
(h) Ausführen des genannten Verfahrens in einer Zeitperiode fester Länge nach der genannten periodischen TBTT, genannt ein Beacon-Intervall (300), umfassend ein Data_Alert-Fenster (340) fester Länge gefolgt von einer Restperiode (345) fester Länge;
(i) Ausführen des genannten Buchungsschritts (a) während des genannten Data_Alert-Fensters, wobei der genannte explizite Buchungsschritt (a.1) weiterhin den Schritt (a.1.1) des Sendens eines Data_Alert-Rahmens (350) durch die Quellen-STA zur Ziel-STA umfasst; und
(j) Ausführen der Schritte (a)-(e) während der genannten Restperiode.

10. Verfahren nach Anspruch 9, wobei der genannte Schlafschritt (e) weiterhin den Schritt umfasst, zunächst folgende Schritte auszuführen:
(e.1) Ermitteln, ob eine Zeitdauer bis zur nächsten TBTT (330) größer als ein Schwellenwert ist; und
e.2) Aktiviert-bleiben bis zur nächsten TBTT, falls die genannte Zeitdauer nicht größer als der genannte Schwellenwert ist.

11. Verfahren nach Anspruch 1, wobei das genannte Netzwerk ein Independent Basic Service Set [IBSS] Wireless Local Network [WLAN] ist.

12. Verfahren nach Anspruch 11, wobei das genannte Netzwerk ein Beacon-Intervall bestehend aus einem Ad-hoc-Verkehrshinweismeldung (ATIM)-Fenster gefolgt von einem Datenrahmenübertragungsfenster hat, wobei:
Schritt (a) aus Anspruch 1 im genannten ATIM-Fenster ausgeführt wird; und
die Schritte (b)-(d) aus Anspruch 1 im genannten Datenrahmenübertragungsfenster ausgeführt werden.

13. Verfahren nach Anspruch 5, wobei:
der Buchungsschritt (a) weiterhin folgende Schritte umfasst:
(a.5) Eingeben der Ziel-STA in eine Zielliste (400) durch die Quellen-STA, und
(a.6) Eingeben der Quellen-STA in eine Quellenliste (900) durch die Ziel-STA;
der explizite Buchungsschritt (a.1) weiterhin folgenden Schritt umfasst:
(a.1.1) Eingeben von "gebucht" für die Ziel-STA in die Zielliste;
der implizite Buchungsschritt (a.2) weiterhin folgenden Schritt umfasst:
(a.2.1) Eingeben von "Von anderen gebucht" für die Ziel-STA in die Zielliste;
der Empfangsschritt (d) weiterhin folgende Schritte umfasst:
(d.2) Löschen einer Quellen-STA aus der Quellenliste, falls das genannte "Weitere Daten"-Bit des empfangenen Datenrahmens (365) Null ist, und
der genannte Aktiviert-bleiben-Schritt (d.1) weiterhin umfasst:
(d.1.1) den Schritt des Aktiviert-bleibens, falls die genannte Quellenliste nicht leer ist.

14. Verfahren nach Anspruch 13, das weiterhin folgende Schritte umfasst:
(g) Aktivieren aller STAs aus der genannten Vielzahl von STAs zu einer periodischen, vorgegebenen Zielbakenübertragungszeit (Target Beacon Transmission Time, [TBTT] (330));
(h) Ausführen des genannten Verfahrens in einer Zeitperiode fester Länger nach der genannten periodischen TBTT, genannt Beacon-Intervall (330), umfassend ein Data_Alert-Fenster (340) fester Länge, unmittelbar gefolgt von einer Restperiode (345) fester Länge:
(i) Ausführen des genannten Buchungsschritts (a) während des genannten Data_Alert-Fensters, wobei der genannte explizite Buchungsschritt (a.1) weiterhin den Schritt (a1.1) des Sendens eines Data_Alert-Rahmens (350) durch die Quellen-STA zur Ziel-STA umfasst; und
(j) Ausführen der Schritte (b)-(f) während der genannten Restperiode.

15. Verfahren nach Anspruch 14, wobei der genannte Schlafschritt (e) weiterhin den Schritt umfasst, zunächst folgende Schritte auszuführen:
(e.1) Ermitteln, ob eine Zeitdauer bis zur nächsten TBTT (330) größer als ein Schwellenwert ist; und
(e.2) Aktiviert-bleiben bis zur nächsten TBTT, falls die genannte Zeitdauer nicht größer als der genannte Schwellenwert ist.

16. Gerät zur Leistungsverwaltung in einem Netzwerk mit einer Vielzahl von drahtlosen Stationen [STAs] (100), von denen jede mindestens entweder eine Quellen-STA oder eine Ziel-STA sein kann, umfassend:
eine Steuerungskomponente (280) einer STA aus der genannten Vielzahl von STAs, wobei die genannte Steuerungskomponente für die direkte Kommunikation zwischen der Quellen-STA und der Ziel-STA konfiguriert ist, um:
(a) die STA periodisch zu einer vorgegebenen Zielbakenübertragungszeit [TBTT] (330) zu aktivieren;
wenn die STA aktiviert ist und nach der vorgegebenen TBTT:
(b) Identifizieren der STA als eine erste Quellen-STA und Buchen einer ersten Ziel-STA, die nicht als von einer zweiten Quellen-STA aus der Vielzahl von STAs gebucht bekannt ist, wenn es mindestens einen von der ersten Quellen-STA zwischengespeicherten Datenrahmen (365) für die Lieferung zur ersten Ziel-STA gibt;
**dadurch gekennzeichnet, dass** die Steuerungskomponente weiterhin dafür konfiguriert ist,
(c) wenn eine vorgegebene Buchungszeit beendet ist und während eines unmittelbar folgenden Übertragungsfensters (345),
(i) einen von der ersten Quellen-STA zwischengespeicherten Datenrahmen an eine zweite Ziel-STA zu senden, die von einer anderen STA aus der Vielzahl von STAs gebucht wurde;
(ii) einen von der ersten Quellen-STA zwischengespeicherten Datenrahmen an die gebuchte Ziel-STA zu senden, wenn nur zwischengespeicherte Datenrahmen für die gebuchten Ziel-STAs durch die erste Quellen-STA zu senden verbleiben:
(iii) einen von einer anderen Quellen-STA aus der genannten Vielzahl von STAs gesendeten Datenrahmen zu empfangen, der der genannten anderen STA zwischengespeichert war; und
(iv) die erste Quellen-STA in den Schlafbetrieb zu versetzen, wenn die erste Quellen-STA keine zu sendenden oder zu empfangenden Datenrahmen hat.

17. Gerät nach Anspruch 16, wobei:
die Steuerungskomponente (280) dafür konfiguriert ist, beim Senden eines Datenrahmens (365) einen "Weitere Daten"-Indikator auf 1 zu setzen, falls mehr als ein Datenrahmen durch die erste Quellen-STA für eine Ziel-STA zwischengespeichert wird, oder auf 0, falls es nur einen gibt; und
die Steuerungskomponente dafür konfiguriert ist, die Ziel-STA aktiviert zu halten, um mehr als einen Datenrahmen zu empfangen, als wenn die Quellen-STA die Ziel-STA für mehr als einen Datenrahmen gebucht hatte.

18. Gerät nach Anspruch 17, wobei die genannte Steuerungskomponente (280) weiterhin dafür konfiguriert ist:
eine Quellenliste (900) und eine Zielliste (400) mit Quellen-STAs und Ziel-STAs zu führen, wobei die genannte Zielliste entsprechend den Vermerk "gebucht" und "Von anderen gebucht" hat, wenn die STA eine Ziel-STA in der genannten Zielliste gebucht hat oder eine andere STA die aufgeführte STA als eine Ziel-STA gebucht hat;
eine Quellen-STA aus der Quellenliste zu löschen, wenn das genannte "Weitere Daten"-Bit 0 ist; und
die STA aktiviert zu halten, wenn die genannte Quellenliste nicht leer ist.

19. Gerät nach Anspruch 18, weiterhin umfassend einen Speicher (220), wobei die genannte Quellenliste (900) und Zielliste (400) von der genannten Steuerungskomponente (280) geführt werden.

20. Gerät nach Anspruch 18, wobei:
bei einer mitgehörten Buchungskonversation zwischen einer Quellen-STA und einer Ziel-STA die Steuerungskomponente (280) dafür konfiguriert ist, mindestens entweder die Quellen-STA oder die Ziel-STA in der Zielliste (400) mit dem Vermerk "Von anderen gebucht" zu versehen;
bei einer mitgehörten Datenrahmenübertragung (365) zwischen einer Quellen-STA und einer Ziel-STA die Steuerungskomponente (280) dafür konfiguriert ist, mindestens entweder die Quellen-STA oder die Ziel-STA in der Zielliste (400) mit dem Vermerk "Von anderen gebucht" zu versehen.

21. Gerät nach Anspruch 16, wobei:
das genannte Netzwerk ein Independent Basic Service Set [IBSS] Wireless Local Network [WLAN] ist;
das genannte vorgegebene Buchungsintervall Intervall ein Ad-hoc-Verkehrshinweismeldung (ATIM)-Fenster (340) ist;
das genannte vorgegebene Buchungsintervall und das genannte unmittelbar folgende Übertragungsfenster ein Beacon-Intervall (300) sind; und
eine Ziel-STA von einer Quellen-STA gebucht wird, die der Ziel-STA einen ATIM-Rahmen (350) sendet.

## Revendications

1. Procédé pour la gestion de puissance par une station sans fil [STA] (100) d'un réseau ayant une pluralité de STA, chaque STA de ladite pluralité étant capable d'être au moins un STA source ou un STA de destination, lesquels STA source ou STA de destination sont directement en communication, le procédé comprenant les étapes de :
(a) réservation par un premier STA source d'un premier STA de destination quand il y a au moins une trame de données mise en mémoire tampon par le premier STA source à distribuer au premier STA de destination; **caractérisé en ce que** le procédé comprend, quand la réservation se termine, l'exécution des étapes de :
(b) envoi de n'importe quelle trame de données (365) mise en mémoire tampon par le premier STA source au deuxième STA source réservé par un deuxième STA source de ladite pluralité de STA,
(c) quand seules les trames de données mises en mémoire tampon (365) pour les STA de destination réservés restent à envoyer par le premier STA source, envoi de n'importe quelle trame de donnée mise en mémoire tampon par le premier STA source aux STA de destination réservés,
(d) réception de n'importe quelle trame de données envoyée par un autre STA de ladite pluralité de STA qui a été mise en mémoire tampon par ledit autre STA,
(e) permettre au premier STA source d'être en attente en mode de basse puissance quand le premier STA source n'a pas de trame de données à envoyer ou recevoir.

2. Procédé selon la revendication 1, dans lequel ladite étape de réservation comprend en outre les étapes de :
(a.1) réservation explicite du premier STA de destination comme "réservé" si ledit premier STA de destination n'est pas encore réservé par un STA source;
(a.2) réservation implicite d'un STA de destination non réservé comme "réservé par d'autres" s'il est capté par écoute discrète dans une conversation sélectionnée du groupe consistant en un accusé de réception d'une réservation par un STA de destination ou une conversation de réservation réussie entre un STA source et un STA de destination; et
(a.3) réservation implicite d'un STA source non réservé comme "réservé par d'autres" s'il est capté par écoute discrète dans une conversation de réservation réussie entre un STA source et un STA de destination.

3. Procédé selon la revendication 2, dans lequel ladite étape de réservation comprend en outre l'étape de :
(a.4) quand tous les STA de destination ont été réservés par un STA source pour lesquels le STA source a mis en mémoire tampon au moins une trame de données (365), réservation explicite de n'importe quel STA réservé implicitement.

4. Procédé selon la revendication 3, comprenant en outre l'étape de :
(f) réservation implicite comme "réservé par d'autres" d'un STA de destination pas encore réservé par un STA source, d'une transmission de trame de données captée par écoute discrète entre un STA source et STA de destination.

5. Procédé selon la revendication 4, dans lequel :
ladite étape d'envoi (b) comprend en outre les étapes de :
(b.1) positionnement du bit de "donnée supplémentaire à 1 ou 0 dans la trame de données sur base respectivement de s'il y a ou non plus d'une trame de données (365) mise en mémoire tampon pour le STA de destination, et
(b.2) réservation explicite du STA de destination comme "réservé" s'il y a plus d'une trame de données mise en mémoire tampon pour le STA de destination; et
ladite étape de réception (d) comprend en outre l'étape de
(d.1) rester éveillé jusqu'à ce que toutes les trames de données soient reçues pour chacune desdites réservations explicites et implicites du STA comme un STA de destination.

6. Procédé selon la revendication 5, comprenant en outre les étapes de :
(g) éveil de tous les STA de ladite pluralité de STA à un temps cible de transmission de la balise [TBTT] périodique prédéterminé (330);
(h) exécution dudit procédé durant une période de temps de longueur fixe suivant ledit TBTT périodique nommé intervalle de balise (300) comprenant une fenêtre Data_Alert de longueur fixe (340) suivie immédiatement par une période restante de longueur fixe (345);
(i) exécution de ladite étape de réservation (a) durant ladite fenêtre Data_Alert, dans laquelle l'étape de réservation explicite (a.1) comprend en outre l'étape (a.1.1) d'envoi d'une trame Data_Alert (350) par le STA source au STA de destination; et
(j) exécution des étapes (b)-(f) durant ladite période restante.

7. Procédé selon la revendication 6, dans lequel ladite étape de veille (e) comprend en outre l'étape de d'abord exécuter les étapes de :
(e.1) détermination quant à savoir si une quantité de temps jusqu'au prochain TBTT (330) est plus grande qu'un seuil; et
(e.2) si ladite quantité de temps n'est pas plus grande que ledit seuil, rester éveillé jusqu'au prochain TBTT.

8. Procédé selon la revendication 2, comprenant en outre les étapes de :
(g) tous les STA de ladite pluralité de STA rivalisent pour envoyer une balise (310) à un temps cible de transmission de la balise [TBTT] périodique prédéterminé (330);
(h) exécution dudit procédé durant une période de temps de longueur fixe suivant ledit TBTT périodique nommé intervalle de balise (300) comprenant une fenêtre Data_Alert de longueur fixe (340) suivie par une période restante de longueur fixe (345);
(i) exécution de ladite étape de réservation (a) durant ladite fenêtre Data_Alert, dans laquelle ladite étape de réservation explicite (a.1) comprend en outre l'étape (a.1.1) d'envoi d'une trame Data_Alert (350) par un STA source au STA de destination; et
(j) exécution des étapes (a) - (d) durant ladite période restante.

9. procédé selon la revendication 2, comprenant en outre les étapes de :
(g) éveil de tous les STA de ladite pluralité de STA à un temps cible de transmission de la balise [TBTT] périodique prédéterminé (330);
(h) exécution dudit procédé durant une période de temps de longueur fixe suivant ledit TBTT périodique nommé intervalle de balise (300) comprenant une fenêtre Data_Alert de longueur fixe (340) suivie par une période restante de longueur fixe (345);
(i) exécution de ladite étape de réservation (a) durant ladite fenêtre Data_Alert, dans laquelle ladite étape de réservation explicite (a.1) comprend en outre l'étape (a.1.1) d'envoi d'une trame Data_Alert (350) par un STA source au STA de destination; et
(j) exécution des étapes (a) - (e) durant ladite période restante.

10. procédé selon la revendication 9, dans lequel ladite étape de veille (e) comprend en outre l'étape de d'abord exécuter les étapes de :
(e.1) détermination quant à savoir si une quantité de temps jusqu'au prochain TBTT (330) est plus grande qu'un seuil; et
(e.2) si ladite quantité de temps n'est pas plus grande que ledit seuil, rester éveillé jusqu'au prochain TBTT.

11. procédé selon la revendication 1, dans lequel ledit réseau est un réseau local sans fil [WLAN] de mode ensemble de services de base indépendant [IBSS].

12. procédé selon la revendication 11, dans lequel ledit réseau a un intervalle de balise consistant en une fenêtre de message indicateur de trafic ad hoc [ATIM] suivie par une fenêtre de transmission de trame de données, dans laquelle :
l'étape (a) de la revendication 1 est exécutée dans ladite fenêtre ATIM; et
les étapes (b)-(d) de la revendication 1 sont exécutées dans ladite fenêtre de transmission de trame de données.

13. procédé selon la revendication 5, dans lequel :
l'étape de réservation (a) comprend en outre les étapes de :
(a.5) entrée du STA de destination dans une liste de destination (400) par le STA source, et
(a.6) entrée du STA source dans une liste source (900) par le STA de destination;
l'étape de réservation explicite (a.1) comprend en outre l'étape de :
(a.1.1) entrée de "réservé" pour le STA de destination dans la liste de destination;
l'étape de réservation implicite (a.2) comprend en outre l'étape de :
(a.2.1) entrée de "réservé par d'autres" pour le STA de destination dans la liste de destination;
l'étape de réception (d) comprend en outre les étapes de :
(d.2) suppression d'un STA source de la liste source si ledit bit de "donnée supplémentaire" de la trame de données reçue (365) est zéro, et
ladite étape de rester éveillé (d.1) comprend en outre :
(d.1.1) l'étape de rester éveillé si ladite liste source n'est pas vide.

14. procédé selon la revendication 13, comprenant en outre les étapes de :
(g) éveil de tous les STA de ladite pluralité de STA à un temps cible de transmission de la balise [TBTT] périodique prédéterminée (330);
(h) exécution dudit procédé dans une période de temps de longueur fixe suivant ledit TBTT périodique nommé intervalle de balise (300) comprenant une fenêtre Data_Alert de longueur fixe (340) suivie immédiatement par une période restante de longueur fixe (345);
(i) exécution de ladite étape de réservation (a) durant ladite fenêtre Data_Alert, dans laquelle l'étape de réservation explicite (a.1) comprend en outre l'étape (a.1.1) d'envoi d'une trame Data_Alert (350) par le STA source au STA de destination; et
(j) exécution des étapes (b)-(f) durant ladite période restante.

15. Procédé selon la revendication 14, dans lequel ladite étape de veille (e) comprend en outre l'étape de d'abord exécuter les étapes de :
(e.1) détermination de si une quantité de temps jusqu'au prochain TBTT (330) est plus grande qu'un seuil; et
(e.2) si ladite quantité de temps n'est pas plus grande que ledit seuil, rester éveillé jusqu'au prochain TBTT.

16. Appareil pour la gestion de puissance dans un réseau ayant une pluralité de stations sans fil [STA] (100), chacune de ladite pluralité de STA étant capable d'être au moins un parmi un STA source et un STA de destination comprenant :
un composant de commande (280) d'un STA de ladite pluralité de STA, ledit composant de commande étant configuré, pour communiquer directement dans le réseau entre le composant source et le composant de destination, pour :
(a) éveiller périodiquement le STA à un temps cible de transmission de la balise [TBTT] 330;
quand le STA est éveillé et après le TBTT prédéterminé;
(b) identifier le STA comme un premier STA source et réserver un premier STA de destination non connu à réserver par un deuxième STA source de ladite pluralité de STA, quand il y a au moins une trame de données (365) mise en mémoire tampon par le premier STA source pour remise au premier STA de destination;
**caractérisé en ce que** le composant de commande est en outre configuré pour,
(c) quand un temps de réservation prédéterminé est terminé et durant une fenêtre de transmission suivant immédiatement (345),
(i) envoyer n'importe quelle trame de données mise en mémoire tampon par le premier STA source au deuxième STA de destination qui a été réservé par un autre STA de ladite pluralité de STA;
(ii) quand seules les trames de données mises en mémoire tampon pour les STA de destination réservés restent à envoyer par le premier STA source, envoyer n'importe quelle trame de données mise en mémoire tampon par le premier STA source au STA de destination réservé;
(iii) recevoir n'importe quelle trame de données envoyée par un autre STA de ladite pluralité de STA qui a été mise en mémoire tampon par ledit autre STA; et
(iv) mettre le premier STA source en mode Attente quand le premier STA source n'a pas de trame de données à envoyer ni à recevoir.

17. Appareil selon la revendication 16, dans lequel :
quand une trame de données (365) est envoyée, le composant de commande (280) est configuré pour positionner un indicateur "donnée supplémentaire" à 1 s'il y a plus d'une trame de données mise en mémoire tampon pour un STA de destination par le premier STA source, ou à 0 s'il y en a seulement une; et
le composant de commande est configuré pour garder le STA de destination éveillé pour recevoir plus d'une trame de données comme si le STA source avait réservé le STA de destination pour plus d'une trame de donnée.

18. Appareil selon la revendication 17, dans lequel ledit composant de commande (280) est en outre configuré pour :
maintenir une liste source (900) et une liste de destination (400) des STA source et des STA de destination, ladite liste de destination étant annotée avec "réservé" et "réservé par d'autres" selon que le STA a réservé un STA de destination dans ladite liste de destination ou si un autre STA a réservé le STA listé comme STA de destination;
supprimer un STA source de la liste source quand ledit bit "donnée supplémentaire" est 0; et
garder le STA éveillé si ladite liste source n'est pas vide.

19. Appareil selon la revendication 18, comprenant en outre une mémoire (220) dans laquelle ladite liste source (900) et ladite liste de destination (400) sont maintenues par ledit composant de commande (280).

20. Appareil selon la revendication 18, dans lequel :
pour une conversation de réservation captée par écoute discrète entre un STA source et un STA de destination, le composant de commande (280) est configuré pour annoter au moins un parmi le STA source et le STA de destination dans la liste de destination (400) avec "réservé par d'autres";
pour une transmission de trame de données captée par écoute discrète (365) entre un STA source et un STA de destination, le composant de commande est configuré pour annoter au moins le STA source ou le STA de destination dans la liste de destination avec "réservé par d'autres".

21. Appareil selon la revendication 16, dans lequel :
ledit réseau est un réseau local sans fil [WLAN] de mode ensemble de services de base indépendants [IBSS].
ledit intervalle de réservation prédéterminé est une fenêtre de message indicateur de trafic ad hoc [ATIM] (340);
ledit intervalle de réservation prédéterminé et ladite fenêtre de transmission suivant immédiatement sont un intervalle de balise (300); et
un STA de destination est réservé par un STA source en envoyant au STA de destination une trame ATIM (350).
